# EUROPEAN PATENT APPLICATION

(11) **EP 3 563 677 A1**
(43) Date of publication of application: **06.11.2019**
(21) Application number: 16925753.2
(22) Date of filing: 27.12.2016
(51) Int. Cl.: A01K 47/02, A01K 47/06

(54) **HONEYCOMB FOR BEEKEEPING AND BEEHIVE USING SAME**

(71) Applicant: Jeong, Hyuk, Gwangju 61498 (KR)
(72) Inventor: Jeong, Hyuk, Gwangju 61498 (KR)
(74) Representative: Stolmár & Partner Patentanwälte PartG mbB
(86) International application number: PCT/KR2016/015318
(87) International publication number: WO 2018/124321

(57) **Abstract**

Disclosed are a bee comb and a beehive using the same. The present invention includes: a first unit comb including a first frame having a lattice shape and installed in a beehive, and a first unit comb foundation supported by the first frame and including a plurality of first unit holes storing honey; a second unit comb installed in the first frame to be able to be slid, and including a second unit comb foundation including a plurality of second unit holes storing honey in a second frame; and a combination unit forming the first and second unit holes into one single hole by attaching the first and second unit combs, and enabling the honey stored in the first and second holes to flow when the first and second frames are relatively moved. As such, the present invention is capable of protecting bees from infectious diseases.

## Description

### [Technical Field]

The present invention relates to a bee comb and a beehive using the same, and more specifically, to a bee comb for beekeeping, which allows honey to be collected from the bee comb without separation of the bee comb, which is mounted on a beehive, from the beehive, and a beehive using the same.

### [Background Art]

Generally, a bee comb (honeycomb), which is formed by coupling an artificial comb foundation to a comb frame having a predetermined frame shape, is inserted into a beehive so that a queen bee spawns therein and worker bees take care of young bees therein and stores honey and pollen. That is, the conventionally used bee comb, which has an entrance for bees, is formed by coupling an artificially manufactured artificial comb foundation to a comb frame, wherein the comb frame has protrusions formed on both upper ends thereof to be put in the beehive and an insertion groove formed in an upper inner surface thereof and is made of wood.

A plurality of such bee combs are formed in the beehive, and when the artificially manufactured artificial comb foundation is filled with honey by bees, the bee combs are periodically separated from the beehive to perform an extracting honey task that harvests honey. To perform the extracting honey task that harvests honey, when the bee comb takes out of the beehive, a worker shakes the bee comb so that a plurality of bees leave, sweeps bees off one by one, and separates honey from unit holes with a honey extractor.

However, to sweep bees off of the bee comb with manual labor, a great deal of labor is required. Further, at a time of harvesting honey, since honey is not harvested within an appropriate period of time due to lack of labor, income is decreased, and the quality of honey is degraded.

In view of this, a method of harvesting honey without separating a bee comb from a beehive has been found.

The Korean Patent Registration No. 10-1556288 discloses a bee comb for beekeeping. The disclosed bee comb for beekeeping includes: a comb frame which forms a base frame and includes a partition slot; a comb foundation which is provided in the comb frame to form a base shape of a bee comb and is provided to be inclined so that honey provided in the bee comb flows from an upper portion of the comb frame toward a lower portion thereof; and a partition part which is separably provided in a partition part slot and seals an open region of one portion of the comb foundation to prevent honey from dropping to a bottom of the comb frame.

However, the bee comb should be separated from the beehive, and the partition part should be separated from the bee comb, and thus there is a problem of relatively degraded workability. That is, to separate the partition part from the bee comb, a space for drawing the partition part from the bee comb is required.

An easily detachable and attachable bee comb is disclosed in Korean Laid-Open Patent Application No. 10-2008-0043418, and an artificial comb foundation for honeybee and a fabricated bee comb using the same are disclosed in Korean Registered Patent No. 912713.

### [Disclosure]

### [Technical Problem]

The present invention is directed to providing a bee comb for beekeeping which performs a honey extracting task that extracts honey without separating the bee comb from a beehive, and a beehive using the same.

The present invention is directed to providing a bee comb for beekeeping which separates a comb frame, a comb foundation, and a comb hole in a width direction to allow honey to flow downward by a weight thereof so as to collect honey using a collection container provided in a honey container.

### [Technical Solution]

One aspect of the present invention provides a bee comb for beekeeping, wherein the bee comb for beekeeping includes a first unit comb which includes a first unit comb which includes a first frame which has a lattice shape and a first unit comb foundation which is supported on the first frame and has a plurality of first unit holes in which honey is stored, a second unit comb which is installed to be slidable relative to the first frame and includes a second unit comb foundation which includes a plurality of second unit holes formed in a second frame thereof so that honey is stored therein, and a coupling unit which allows the first and second unit combs to be pressed against each other to form the first and second unit holes into a single unit hole and allows honey stored in the first and second unit holes to flow when the first and second frames are relatively moved.

A blocking wall may be formed between the first unit holes and the second unit holes, wherein the blocking wall includes a first blocking wall formed at a part of an inner end of each of the first unit holes and a second blocking wall which corresponds to the first blocking wall and is formed at a region of an inner end of each of the second unit holes which does not include the second unit hole closed by the first blocking wall.

The first unit holes formed in the first unit comb and the second unit holes formed in the second unit bee comb may be formed to be inclined toward a side at which the first unit comb corresponds to the second unit comb.

A honey collection path may be formed on a lower portion of the first frame and a lower portion of the second frame, which is coupled with the first frame, to collect honey flowing downward when the first frame is misaligned with the second frame.

Another aspect of the present invention provides a bee comb for beekeeping, wherein the bee comb for beekeeping includes a first unit comb which includes a first frame which has a lattice shape and a first unit comb foundation which has a plurality of first unit holes in which honey is stored, a second unit comb which is installed to be slidable relative to the first frame and includes a second unit comb foundation which includes a plurality of second unit holes formed in a second frame thereof so that honey is stored therein, a third unit comb which is installed between the first and second unit combs, is installed to be slidable relative to the first and second frames, and includes a third unit comb foundation which has a plurality of third unit holes formed in a third frame thereof so that honey is stored therein, and a coupling unit which allows the first, second, and third unit combs to be pressed against each other to form the first, second and third unit holes into a single unit hole and allows honey stored in the first, second, and third unit holes to flow downward when the first, second, and third unit holes are misaligned when one of the first, second, and third frame slides so as to allow honey in the first, second, and third unit holes to flow downward.

A honey collection path may be formed below the first, second, and third frames to collect honey flowing downward when the first, second, and third frames are misaligned.

The third unit comb positioned between the first and second unit combs may include a dividing wall that divides the third unit holes, the third unit hole may be formed to have a cross-sectional area smaller than that of each of the first and second unit holes, and each of the first and second unit holes may be tapered from an entrance toward the first and second unit holes.

Still another aspect of the present invention provides a bee comb for beekeeping, wherein the bee comb for beekeeping includes a first unit comb which includes a first frame having a lattice shape and a first unit comb foundation which has a plurality of first unit holes formed in a first frame thereof so that honey is stored therein and a partition member which is fixed to one side of the first frame and blocks one sides of the first unit holes of the first unit comb.

The bee comb for beekeeping may further include a honey collection container in which honey is stored, a support frame which is formed on an upper surface of the honey collection container and has a lattice shape, a bee comb which is supported in an inner space of the support frame and has a plurality of unit holes formed therein, and a blocking unit which is installed on the bee comb or installed between the bee comb and the honey collection container and opens or closes lower ends of the unit holes.

The blocking unit may include a blocking panel slidably installed between the honey collection container and the bee comb.

A blocking wall may be formed on an upper surface of the honey collection container and formed on lower ends of the unit holes to partially block the unit holes, and through holes may be formed to be open at a portion of the blocking wall corresponding to the unit holes that are not blocked by the blocking wall so that the unit holes are closed or opened by the bee comb sliding from the honey collection container.

Yet another aspect of the present invention provides a bee comb for beekeeping, wherein the bee comb for beekeeping includes a beehive main body which includes a bee comb installation space having an open upper end and includes an entrance formed at a lower side thereof, a beehive cover which covers an upper end of the beehive main body and includes a vent that communicates with an inside of the beehive main body, and a plurality of bee combs installed in the bee comb installation space.

Each of the bee combs includes a first frame which has a lattice shape, a first unit comb which is supported on the first frame and includes a first unit comb foundation having a plurality of unit holes formed therein so that honey is stored therein, a second unit comb which is installed to be slidable relative to the first frame and includes a second unit comb foundation formed in a second frame thereof so that honey is stored therein, and a coupling unit which allows the first and second unit combs to be pressed against each other so as to form a single unit hole and allows honey stored in the first and second unit holes to flow downward when the first and second frames are relatively moved.

### [Advantageous Effects]

In a bee comb and a beehive using the same according to the present invention, bee combs can be divided to be misaligned or open so as to allow honey in holes to flow downward by a weight thereof, and thus honey can be easily extracted and working hours for honey extraction can be reduced.

Further, in the beehive using the bee comb for beekeeping according to the present invention, it is not necessary that a cover is opened every time whenever honey is collected, and thus bees can be protected from an infectious disease, such as Sacbrood, or from an insect such as waxworm.

### [Description of Drawings]

FIG. 1 is an exploded perspective view showing a beehive which has a bee comb according to one embodiment of the present invention formed therein.
FIG. 2 is an exploded perspective view showing the bee comb shown in FIG. 1.
FIG. 3 is a cross-sectional view showing the bee comb shown in FIG. 1.
FIG. 4 is a cross-sectional view showing a bee comb according to another embodiment of the present invention.
FIG. 5 is a partially cut-out perspective view showing a coupling unit according to one embodiment.
FIG. 6 is an exploded perspective view showing a bee comb according to another embodiment of the present invention.
FIG. 7 is a cross-sectional view of the bee comb shown in FIG. 6.
FIG. 8 is a partially cut-out perspective view showing the bee comb according to another embodiment of the present invention.
FIG. 9 is an exploded perspective view showing a bee comb according to another embodiment of the present invention.
FIG. 10 is a cross-sectional view of the bee comb shown in FIG. 9.
FIG. 11 is a cross-sectional view showing the bee comb according to another embodiment the present invention.
FIG. 12 is a cross-sectional view showing a bee comb according to still another embodiment of the present invention.
FIG. 13 is a partially cut-out perspective view of the bee comb shown in FIG. 12.
FIG. 14 is a partially cut-out perspective view showing the bee comb according to still another embodiment of the present invention.
FIG. 15 is a cross-sectional view of the bee comb shown in FIG. 14.
FIGS. 16 and 17 are exploded perspective views showing bee combs according to other embodiments of the present invention.

### [Modes of the Invention]

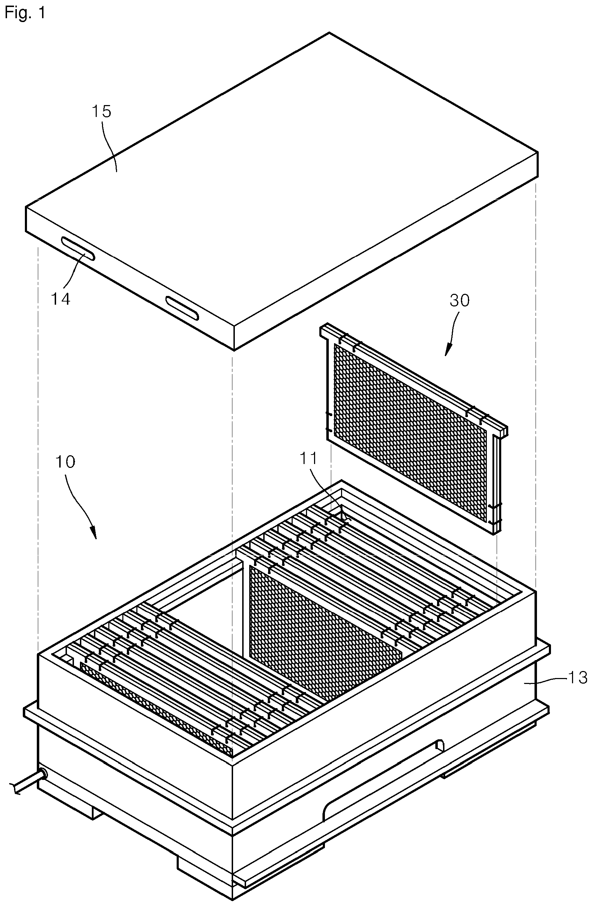

Embodiments of bee combs for beekeeping and beehives using the same according to the present invention are shown in FIGS. 1 to 9.

Referring to the drawings, a bee comb 10 for beekeeping according to the present invention includes a bee comb installation space 11 which has an open upper end, a beehive main body 13 which has an entrance 12 formed on a lower side thereof, and a beehive cover 15 which covers an upper end of the beehive main body 13 and which has a vent 14 formed on an outer circumferential surface thereof to communicate with the inside of the beehive main body 13. A plurality of bee combs 20 are installed in the bee comb installation space 11 at predetermined distances. Although not shown in the drawings, a honey collecting part (not shown) may be provided, wherein the honey collection part discharges honey, which is discharged through a honey collection path described below, to the outside.

The beehive main body 13 may be formed of a material such as yellow soil, ceramic or a mixture thereof, a synthetic resin, or the like. Materials which are as harmless to human beings as possible and as environmentally friendly as possible may be used. One or more bee comb installation spaces 11 of the beehive main body 13 may be formed but may be formed so that the bee combs are arranged in a transverse direction or arranged in an upward direction in a stacking structure.

Meanwhile, embodiments of the bee combs installed in the bee comb installation space 11 of the bee comb 10 are shown in FIGS. 1 to 6.

Referring to the drawings, each of the bee combs 20 according to the present invention includes a first unit comb 30 and a second unit comb 40, wherein the first unit comb 30 includes a first frame 31 having a lattice shape and a first unit comb foundation 35 which is supported on the first frame 31 and includes a plurality of first unit holes 32 in which honey is stored, and the second unit comb 40 includes a second frame 41, which is installed to be slidable relative to the first frame 31 or to relatively move, that is, the first frame 31 and the second frame 41 move to widen a gap therebetween, and corresponds to the first frame 31 and a second unit comb foundation 45 which is supported on the second frame 41 and has a plurality of second unit holes 42 formed therein so that honey is stored therein.

The first and second unit combs 30 and 40 are pressed against each other so that the first and second unit holes 32 and 42 are formed into a single unit hole. The bee combs 20 include a coupling unit 70 which maintains the first and second frames 31 and 41 with the gap being widened or maintains a state in which the first and second unit holes 32 and 42 are relatively moved such that the first and second unit holes are misaligned so as to allow honey stored in the first and second unit holes to flow.

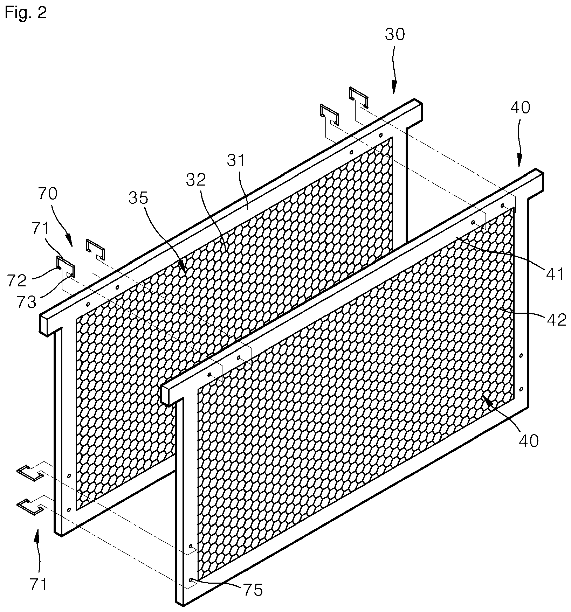

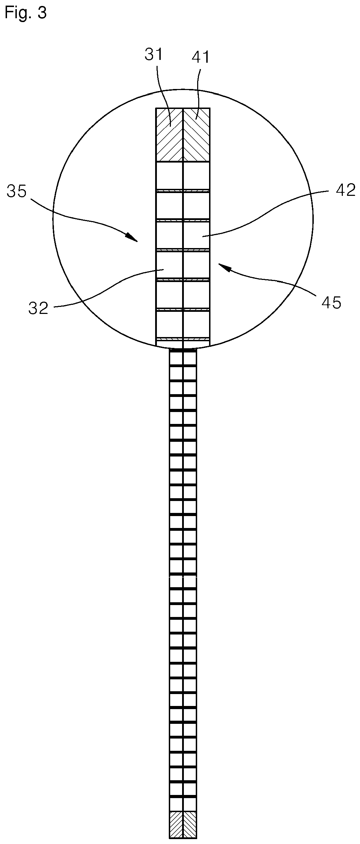

The first frame 31 of the first unit comb 30 has substantially the same shape as the second frame 41 of the second unit comb 40, as shown in FIGS. 2 and 3, and the first and second frames 31 and 41 have a latticed rectangular frame shape. The first and second frames 31 and 41 may be made of wood or a synthetic resin, and thicknesses of the first and second frames 31 and 41 are substantially the same as widths (thicknesses) of the first and second unit comb foundations 35 and 45.

The first and second unit comb foundations 35 and 45 installed in the first frame 31 and the second frame 41 have substantially the same structure. The plurality of first unit holes 32 of successive hexagons are formed in the first comb foundation 35. The first unit hole 32 has a structure that is passed through in a width direction. The plurality of second unit holes 42 of successive hexagons are formed in the second comb foundation 45. Since the second unit holes 42 pass through the first unit comb foundation 35 in the width direction like the first unit holes 32, when the first and second frames 31 and 41 are pressed against each other, the first and second unit comb foundations 35 and 45 are pressed against each other, and ends of the first unit holes 32 and 42 that correspond to each other are pressed against each other, and thus a single unit hole is formed. To this end, when the first and second frames 31 and 41 are arranged, positions of the first unit holes 32 formed in the first unit comb 30 may correspond to positions of the second unit holes 42 formed in the second unit comb 40.

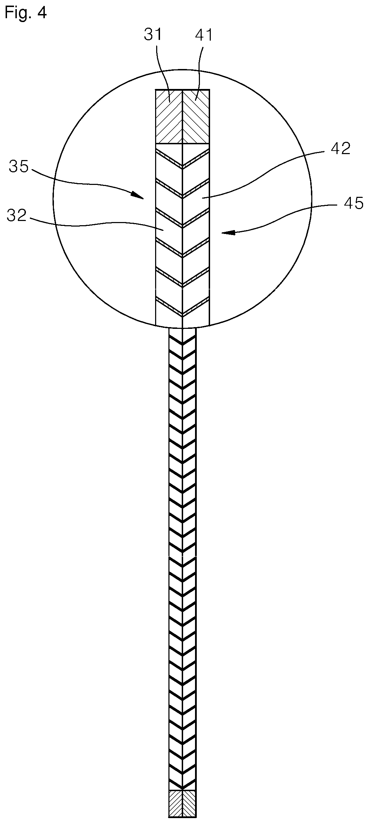

Further, as shown in FIG. 4, since the first unit holes 32 formed in the first unit comb 30 and the second unit holes 42 formed in the second unit comb 40 are formed to be inclined toward a middle portion at which the first unit holes 32 comes into contact with the second unit holes 42, and when the first and second unit holes 32 and 42 are misaligned, honey formed in the first and second unit holes 32 and 42 may easily flow downward.

In FIGS. 1 and 2, the coupling unit 70 maintains a state in which the first and second frames 31 and 41 are pressed against each other when the first and second frames 31 and 41 are arranged or maintains a state in which the first and second frames 31 and 41 are misaligned in a width direction so as to allow honey to flow downward. Referring to the drawings, the coupling unit 70 may include a plurality of clips 71 or bands which maintain a state in which the first and second frames 31 and 41 are pressed against each other. When the coupling unit 70 includes the clips 71, the clip is made of an elastic material, is curved so that both end parts 72 and 73 are supported on lateral surfaces of the first and second frames 31 and 41, and has a C shape. The first and second frame 31 and 41 may have grip position grooves 75 to be gripped by the clips 71 when the first and second frame 31 and 41 are arranged or misaligned so as to allow honey to flow from the first and second unit holes 32 and 42. Guide rails that limit a movement direction may be installed on facing sides of the first and second frame 31 and 41.

According to another embodiment of the coupling unit 70, the coupling unit 70 includes an operational lever 76 that includes a hinge part 76a rotatably installed in the first frame 31, a pinion part 76c that is connected with the hinge part 76a and engaged with a rack part 76b formed in the second frame 41, and a rotation lever 76d that extends from the pinion part 76c. The coupling unit 70 is not limited to the above described embodiment, and a structure that supports the first and second bee combs 30 and 40 while the first and second bee combs 30 and 40 are pressed against each other is possible. For example, the coupling unit may be formed as a set-screw, and when the coupling unit is formed as a set-screw, a gap between the first and second unit combs 30 and 40 is widened, and thus honey stored in the first and second unit holes 32 and 42 flows to the gap and is collected. Further, an actuator that rotates the operational lever is installed in the coupling unit 70, and the coupling unit 70 can be automatized. That is, the actuator is controlled remotely to relatively move the first and second unit combs mounted in the beehive from the outside, and thus honey can be collected as described above.

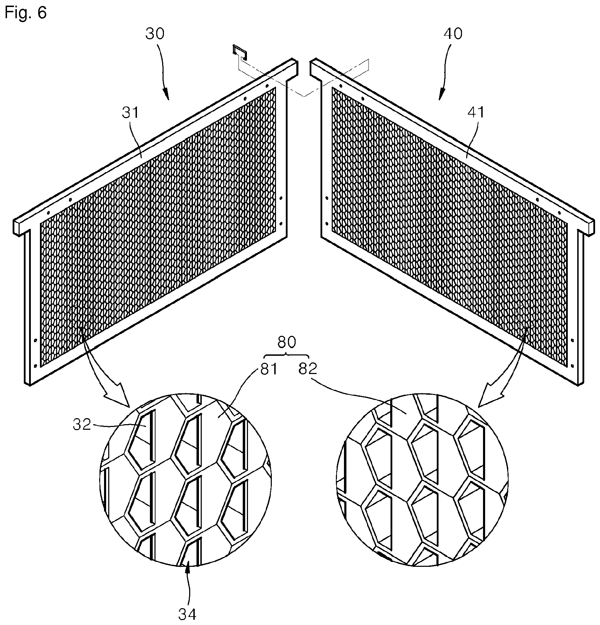

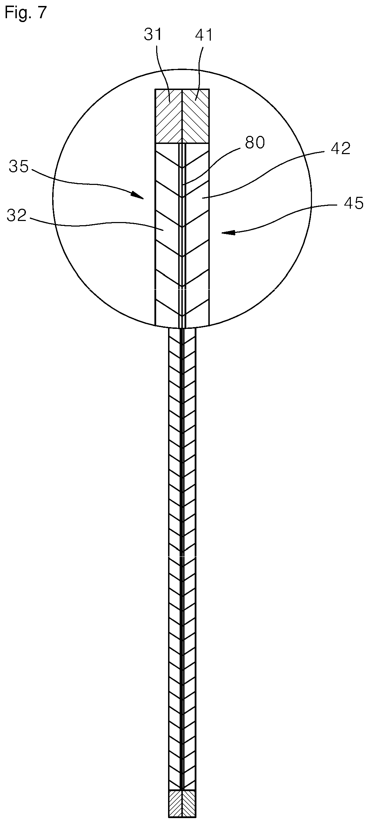

As shown in FIGS. 6 and 7, a first blocking wall 81 that partially blocks the first unit holes 32 is formed in inner ends of the plurality of first unit holes 32, and a second blocking wall 82 is formed in a region, which corresponds to a region that is not blocked by the first blocking wall 81, of inner ends of the second unit holes 42, and thus a blocking wall 80 is formed between the first unit comb 30 and the second unit comb 40. The first blocking wall 81 and the second blocking wall 82 are formed to block half of the first and second unit holes 32 and 42 in a vertical direction, and the formation directions of the first and second blocking walls 81 and 82 are misaligned. When the first unit comb 30 is coupled to the second unit comb 40, the blocking wall 80 may be formed by the first and second blocking walls 81 and 82.

The blocking wall is not limited to the above-described embodiment. Although not shown in the drawings, the blocking wall may be formed of a partition that extends from at least one of the first and second frames 31 and 41 to a gap between the first and second unit comb foundations 35 and 45.

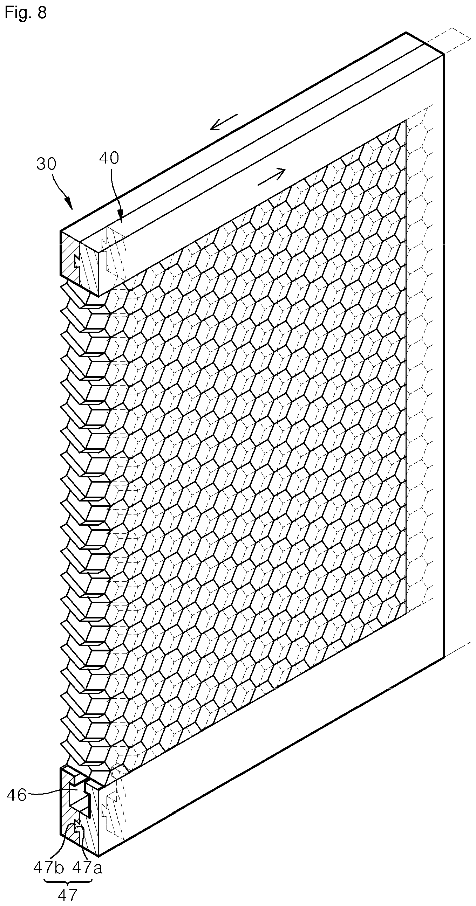

Further, as shown in FIG. 8, a honey collection path 46 that induces honey which flows from the first and second unit holes 32 and 42 to be discharged is formed on lower portions of the first and second frames 31 and 41 of the first and second unit comb foundations 35 and 45 so that the first and second unit comb foundations 35 and 45 are relatively moved in a horizontal direction, that is, are slidably moved. A guide part 47 may be formed in the first and second frames 31 and 41 so that the honey collection path 46 is maintained, and the guide part 47 may include a guide protrusion 47a and a guide groove 47b that are formed as a dove-tail shape.

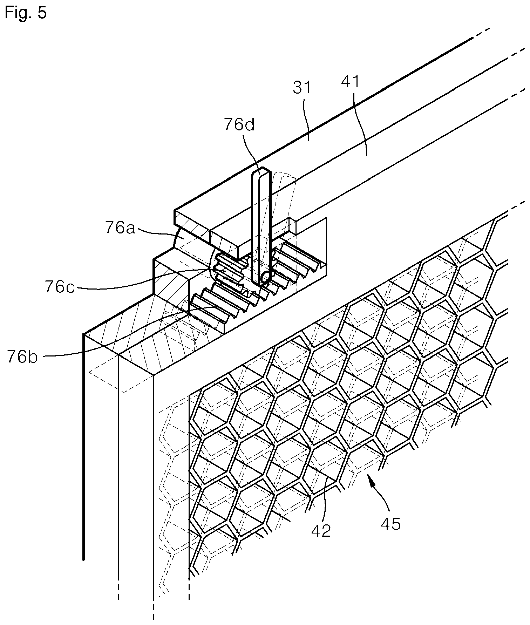

In the bee comb for beekeeping according to the present invention configured as described above, the first and second unit combs 30 and 40 are relatively moved, that is, are relatively moved in a vertical direction or left and right direction. For example, as shown in FIG. 5, when the operational lever 76d is rotated, the second frame 41 is moved relatively to the first frame 31. Therefore, since the first and second unit holes 32 and 42 of the first and second unit combs 30 and 40 are alternately maintained, the bee comb may have a structure that connects the first and second unit holes 32 and 42 in a vertical direction (see FIGS. 3 and 4).

Therefore, the honey between the first and second unit holes 32 and 42 flows downward to the honey collection path 46 and is collected. When the honey is collected, the first and second unit combs 30 and 40 are arranged so that the first and second unit holes 32 and 42 are formed as a single unit hole, or as shown in FIG. 7, the blocking wall 80 may be formed between the first and second unit combs 30 and 40.

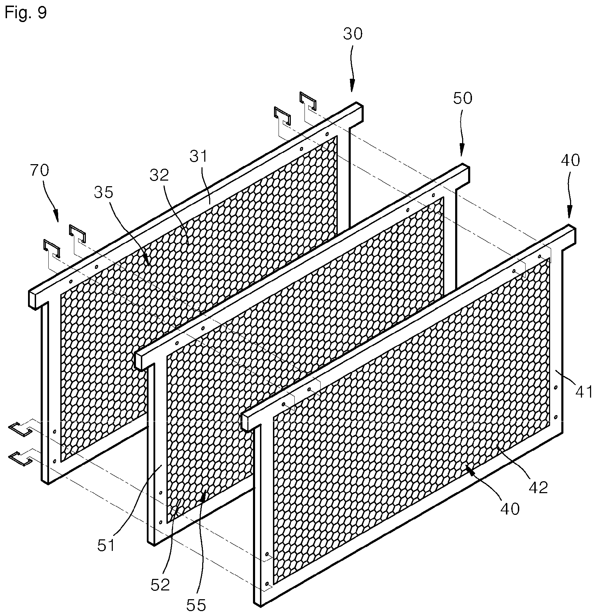

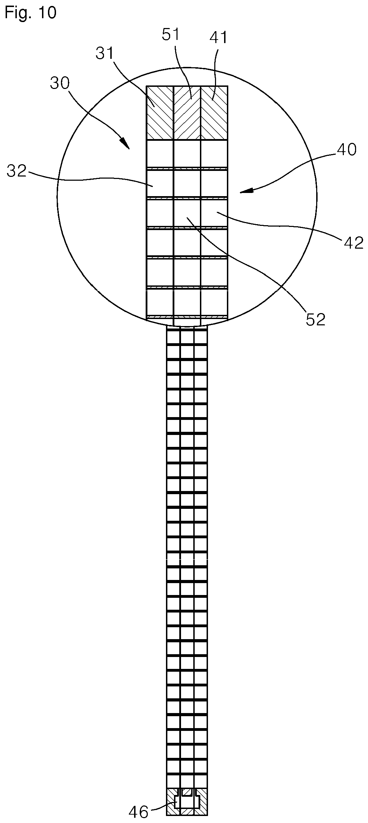

A bee comb for beekeeping according to another embodiment of the present invention is shown in FIGS. 9 and 10. In the embodiment of the present invention, the same reference numerals as those in the above-described embodiments indicate the same components.

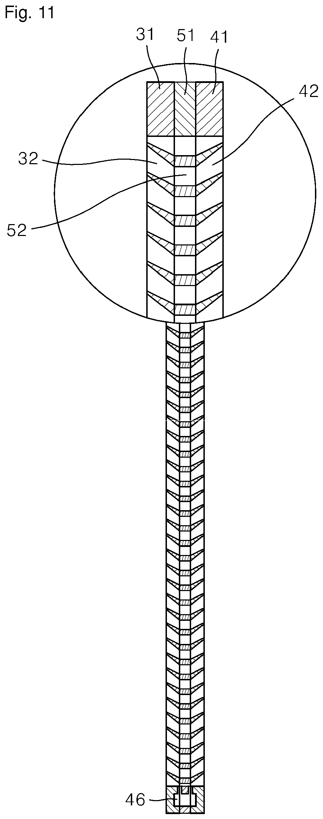

Referring to the drawings, in the bee comb for beekeeping according to the present invention, a third unit comb 50 is installed between the first and second unit combs 30 and 40 to move relatively to the first and second unit combs 30 and 40. The third unit comb 50 has substantially the same structure as the first and second unit combs 30 and 40. As shown in FIG. 9, the third unit comb 50 includes a third frame 51 having a lattice shape and a third unit comb foundation 55, which is supported on the third frame 51 and has a plurality of third unit holes 52 in which honey is stored, and when the first, second, and third unit combs 30, 40, and 50 are arranged, the first, second, and third unit holes are connected with each other to form a single unit hole. When the third unit comb foundation 55 is moved relatively to the first and second unit comb foundations 35 and 45, the third unit holes 52 are misaligned with the first and second unit holes 32 and 42, and thus the first, second, and third unit holes 32, 42, and 52 of a boundary part between the first unit holes 32 and the third unit holes 52 are connected with the first, second, and third unit holes 32, 42, and 52 of a boundary part between the second unit holes 42 and the third unit holes 52, and thus honey flows downward. To discharge honey more easily, the first and second unit holes 32 and 42 may be formed to be inclined toward the third unit holes 52. Further, as shown in FIG. 11, the third unit holes 52 may be formed to be smaller than the first and the second unit holes 32 and 42, and in this case, the first and second unit holes 32 and 42 may be tapered toward the third unit holes 52.

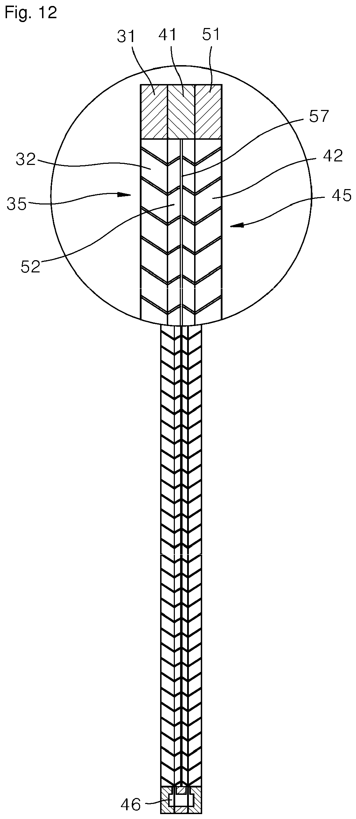

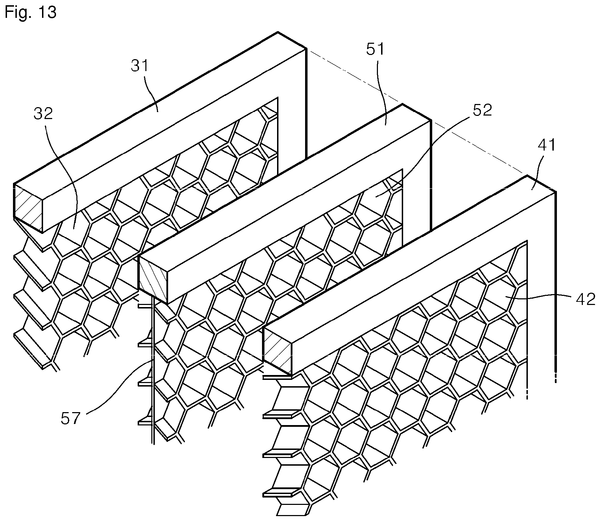

As shown in FIG. 12, a dividing wall 57 that divides a middle of the third unit holes 52 may be formed in the third unit comb 50. When the middle of the third unit holes 52 are divided by the dividing wall 57, the first, second, and third unit holes 32, 42 and 52 have a structure that is inclined downward toward a pressing part (see FIG. 13).

The coupling unit 70 that couples and relatively moves the first, second, and third unit holes 32, 42, and 52 is further provided, wherein the coupling unit may include clips or bands but is not limited thereto and, as shown in FIG. 5, may be formed in a rack-and-pinion structure.

In the bee comb configured as described above, when the third unit comb 50 is slid due to the first and second unit combs 30 and 40, the first, second and third unit holes 32, 42, and 52 are misaligned, and as shown in FIGS. 12 and 13, honey flows downward. The flowing honey is introduced into the honey collection path 46 installed in the first, second, and third frames and is collected.

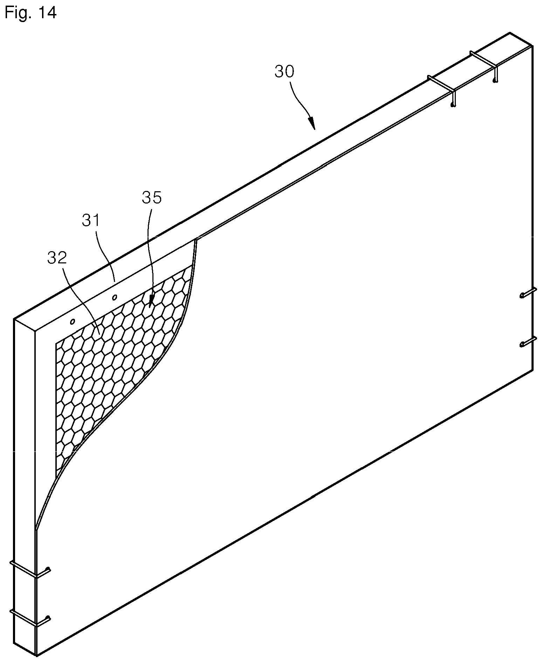

A bee comb for bee keeping according to still another embodiment of the present invention is shown in FIGS. 14 to 17. In the embodiment of the present invention, the same reference numerals as those in the above-described embodiments indicate the same components.

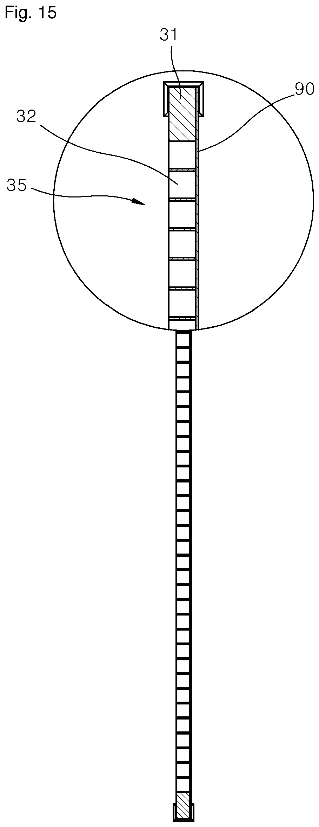

Referring to FIGS. 14 and 15, the bee comb includes a first unit comb 30 and a partition member 90, wherein the first unit comb 30 includes a first frame 31 having a lattice-shape and a first unit comb foundation 35 which has a plurality of first unit holes 32 formed therein so that honey is stored therein, and the partition member 90 is fixed to one side of the first frame 31 and blocks one sides of the first unit holes 32 of the first bee comb. In the embodiments, the first unit holes 32 are formed to be inclined toward a partition member 90.

In the bee comb for beekeeping configured as described above, when the partition member 90 is removed while each of the first unit holes 32 is filled with honey, the honey in the first unit holes 32 flows along a side from which the partition member 90 is removed and is collected.

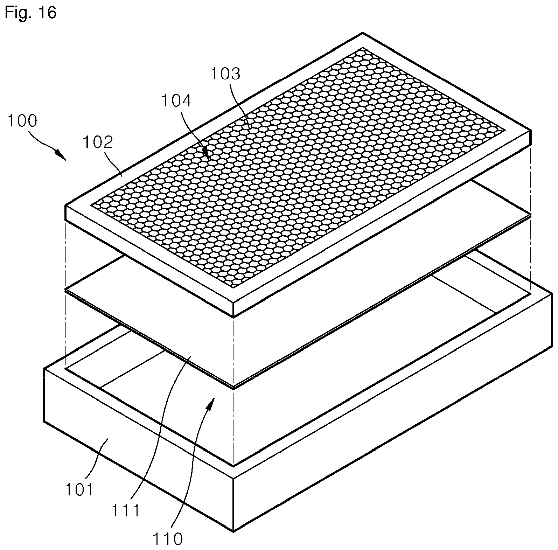

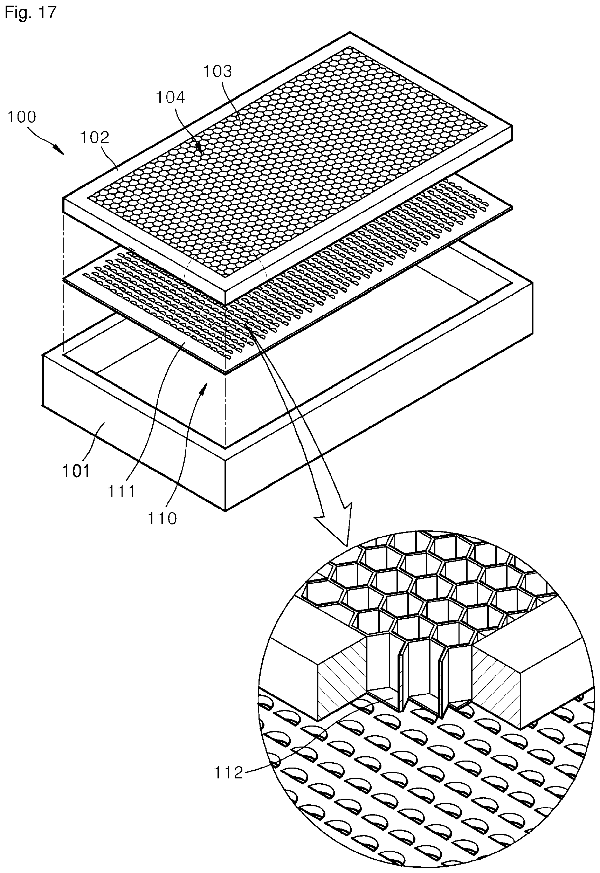

A bee comb for beekeeping according to other embodiments of the present invention is shown in FIGS. 16 and 17.

Referring to the drawings, a bee comb 100 for beekeeping includes a honey collection container 101 in which honey is stored, a support frame 102 which has a lattice shape and is formed on an upper surface thereof, and a unit comb 104 which is supported in an inner space of the support frame 102 and includes a plurality of unit holes 103. A blocking unit 110 that selectively opens or closes the unit holes 103 is provided between the honey collection container 101 and the unit comb 104.

The blocking unit 110 includes a blocking panel 111 slidably installed between the honey collection container 101 and the unit comb 104.

As shown in FIG. 17, the blocking unit includes a first blocking film 112 that partially blocks lower portions of the unit holes 103 formed in the unit comb 104 supported above the honey collection container 101, and the blocking panel 111 includes through holes 113 formed at a portion corresponding to the first blocking film 112 and has a structure that blocks or opens the lower portions of the unit holes 103 when the blocking panel 111 slides.

In a state in which the bee comb configured as described above is stacked in the beehive, when the blocking panel 111 is removed or slides from the unit comb 104 so that the through holes 113 correspond to a region in which the first blocking film 112 is not formed, honey formed in the unit holes of the unit comb 104 can be collected.

As described above, the bee comb and the beehive using the same according to the present invention allow honey to flow downward from the unit holes of the bee comb to collect the honey, and thus honey can be easily extracted, and working hours for extracting honey can be reduced.

The present invention has been described with reference to the embodiments shown in the drawings but is only exemplary. It will be understood by those skilled in the art that various modifications and other equivalent embodiments are possible from the embodiments. Therefore, the technical scope of the present invention should be defined by the technical spirit of the appended claims.

## Claims

1. A bee comb for beekeeping, comprising:
a first unit comb which includes a first frame which has a lattice shape and a first unit comb foundation which is supported on the first frame and has a plurality of first unit holes in which honey is stored;
a second unit comb which is installed to be slidable relative to the first frame and includes a second unit comb foundation which includes a plurality of second unit holes formed in a second frame thereof so that honey is stored therein; and
a coupling unit which allows the first and second unit combs to be pressed against each other to form the first and second unit holes into a single unit hole and allows honey stored in the first and second unit holes to flow when the first and second frames are relatively moved.

2. The bee comb for beekeeping of claim 1, wherein a blocking wall is formed between the first unit holes and the second unit holes, wherein the blocking wall includes a first blocking wall formed at a part of an inner end of each of the first unit holes and a second blocking wall which corresponds to the first blocking wall and is formed at a region of an inner end of each of the second unit holes which does not include the second unit hole closed by the first blocking wall.

3. The bee comb for beekeeping of claim 1, wherein the first unit holes formed in the first unit comb and the second unit holes formed in the second unit comb are formed to be inclined toward a side at which the first unit comb corresponds to the second unit comb.

4. The bee comb for beekeeping of claim 1, wherein a honey collection path is formed on a lower portion of the first frame and a lower portion of the second frame, which is coupled with the first frame, to collect honey flowing downward when the first frame is misaligned with the second frame.

5. A bee comb for beekeeping, comprising:
a first unit comb which includes a first frame having a lattice shape and a first unit comb foundation which has a plurality of first unit holes formed therein so that honey is stored therein;
a second unit comb which is installed to be slidable relative to the first frame and includes a second unit comb foundation which includes a plurality of second unit holes formed in a second frame thereof so that honey is stored therein;
a third unit comb which is installed between the first and second unit combs, is installed to be slidable relative to the first and second frames, and includes a third unit comb foundation which has a plurality of third unit holes formed in a third frame thereof so that honey is stored therein; and
a coupling unit which allows the first, second, and third unit combs to be pressed against each other to form the first, second and third unit holes into a single unit hole and allows honey stored in the first, second, and third unit holes to flow downward when the first, second, and third unit holes are misaligned when one of the first, second, and third frame slides so as to allow honey in the first, second, and third unit holes to flow downward.

6. The bee comb for beekeeping of claim 5, wherein a honey collection path is formed below the first, second, and third frames to collect honey flowing downward when the first, second, and third frames are misaligned.

7. The bee comb for beekeeping of claim 5, wherein the third unit comb positioned between the first and second unit combs includes a dividing wall that divides the third unit holes.

8. The bee comb for beekeeping of claim 7, wherein the third unit hole is formed to have a cross-sectional area smaller than that of each of the first and second unit holes, and each of the first and second unit holes is tapered from an entrance toward the first and second unit holes.

9. A bee comb for beekeeping, comprising:
a first unit comb which includes a first frame which has a lattice shape and a first unit comb foundation which has a plurality of first unit holes formed in a first frame thereof so that honey is stored therein; and
a partition member which is fixed to one side of the first frame and blocks one sides of the first unit holes of the first unit comb.

10. The bee comb further comprising:
a honey collection container in which honey is stored;
a support frame which is formed on an upper surface of the honey collection container and has a lattice shape;
a bee comb which is supported in an inner space of the support frame and has a plurality of unit holes formed therein; and
a blocking unit which is installed on the bee comb or installed between the bee comb and the honey collection container and opens or closes lower ends of the unit holes.

11. The bee comb of claim 10, wherein the blocking unit includes a blocking panel slidably installed between the honey collection container and the bee comb.

12. The bee comb of claim 11, wherein a blocking wall is formed on an upper surface of the honey collection container and formed on lower ends of the unit holes to partially block the unit holes, and
through holes are formed to be open at portions of the blocking wall corresponding to the unit holes which are not blocked by the blocking wall so that the unit holes are closed or opened by the bee comb sliding from the honey collection container.

13. A bee comb for beekeeping, comprising:
a beehive main body which includes a bee comb installation space having an open upper end and includes an entrance formed at a lower side thereof;
a beehive cover which covers an upper end of the beehive main body and includes a vent that communicates with an inside of the beehive main body; and
a plurality of bee combs installed in the bee comb installation space,
wherein each of the bee combs includes:
a first frame which has a lattice shape;
a first unit comb which is supported on the first frame and includes a first unit comb foundation having a plurality of unit holes formed therein so that honey is stored therein;
a second unit comb which is installed to be slidable relative to the first frame and includes a second unit comb foundation formed in a second frame thereof so that honey is stored therein; and
a coupling unit which allows the first and second unit combs to be pressed against each other so as to form a single unit hole and allows honey stored in the first and second unit holes to flow downward when the first and second frames are relatively moved.
